# EUROPÄISCHE PATENTSCHRIFT

(11) **EP 0 508 101 B1**
(45) Veröffentlichungstag und Bekanntmachung des Hinweises auf die Patenterteilung: **06.12.1995**
(21) Anmeldenummer: 92103718.0
(22) Anmeldetag: 05.03.1992
(51) Int. Cl.: C08L 59/00, C08G 2/18, C08K 5/07, C09D 171/14, C08G 8/06, C08G 16/02

(54) **Härtbare Formmasse**
Hardening moulding masses
Masses de moulage durcissables

(30) Priorität: 14.03.1991 DE 4108270
(43) Veröffentlichungstag der Anmeldung: 14.10.1992
(73) Patentinhaber: Keramchemie GmbH, D-56427 Siershahn (DE)
(72) Erfinder: Schedlitzki, Dietmar, Dipl.-Chem. Dr., W-5431 Holler (DE); Schwickart, Karl-Josef, Dipl.-Ing., W-5433 Siershahn (DE); Tuchscherer, Dipl.-Chem. Dr., W-6250 Limburg-Offheim (DE)
(74) Vertreter: Kossobutzki, Walter, Dipl.-Ing.(FH)

(56) Entgegenhaltungen:
- EP-A- 0 157 023
- GB-B- 941 960
- US-A- 4 320 043
- Derwent Publications Ltd., London, GB; AN 87-260313 ; & JP-A-62 179847
- Derwent Publications Ltd., London, GB; AN 82-82082E ; & JP-A-57 134234

## Beschreibung

Die Erfindung bezieht sich auf eine härtbare Formmasse zur Herstellung von korrosionsbeständigen Beschichtungen sowie zum Verlegen und/oder Verfugen von insbesondere keramischen Platten, bestehend aus 100 Gewichtsteilen Furanharz und 10 - 95 Gewichtsteilen Furfurylalkohol oder 10 - 95 Gewichtsteilen aromatischen Aldehyden, wobei die Aldehydgruppe entweder direkt am Aromatenring sitzt oder über eine Alkylen- oder Alkenylengruppe mit demselben verbunden ist, einem oder mehreren Säurehärtern, Füllstoffen und/oder Fasern und üblichen Hilfsstoffen.

Zur Herstellung von korrosionsbeständigen Beschichtungen sowie zum Verlegen und/oder Verfugen von keramischen Platten sind härtbare Formmassen bekannt, die aus einem handelsüblichen Furanharz auf der Basis von Furfurylalkohol bestehen. Zur Bildung einer niedrigviskosen Furanharzlösung wird dem Furanharz Furfural zugegeben. Diese Furanharzlösung wird dann mit Füllstoffen, beispielsweise Quarzmehl, Quarzsand, Kohlepulver, Graphit und/oder Schwerspat abgefüllt. Dabei wird gleichzeitig auch ein Säurehärter, beispielsweise eine organische und/oder eine Mineralsäure und/oder deren Addukte oder Salze zugegeben. Zusätzlich werden in die Furanharzlösung noch übliche Hilfsstoffe, z.B. Netzmittel und Haftvermittler, eingemischt. Diese durch einen Mischvorgang hergestellte Formmasse wird beispielsweise als Beschichtung auf einem Betonboden oder dgl. aufgebracht, wo sie aushärtet. Bei dieser bekannten Formmasse hat die Zugabe von Furfural den Zweck, das Furanharz zu verdünnen und damit die Möglichkeit für eine höhere Zugabe von Füllstoffen zu schaffen, um die Eigenschaften der Formmasse zu verbessern. Durch die Zugabe von Furfural wird insbesondere die chemische Beständigkeit erhöht. Darüber hinaus erleichtert Furfural die Verarbeitung und dient gleichzeitig auch als Vernetzungsmittel.

Furfural hat jedoch eine hohe Toxizität; der LD₅₀₋ Wert liegt bei etwa 127 mg/kg Ratte. Die derzeitige maximale Arbeitsplatz-Konzentration beträgt 5 ppm. Darüber hinaus weist eine Furfural enthaltende Furanharzlösung bzw. Formmasse einen besonders intensiven Geruch auf, der sich bei der Verarbeitung der Furanharzlösung und der Formmasse nachteilig bemerkbar macht.

Um die Geruchsbelästigung zu verringern, die Toxizität zu reduzieren und die Druckfestigkeit der ausgehärteten Formmasse zu erhöhen, ist es aus der DE-OS 38 04 957 bekannt, einer solchen Formmasse auf 100 Gewichtsteile Furanharz 25 - 100 Gewichtsteile aromatischer Aldehyde zuzusetzen, wobei die Aldehydgruppe entweder direkt am Aromatenring sitzt oder über eine Alkylen- oder Alkenylgruppe mit demselben verbunden ist. Beim Einsatz derartiger Formmassen wurde jedoch festgestellt, daß deren Lösemittelbeständigkeit, insbesondere gegen Methylenchlorid nicht immer ausreichend ist und daß eine solche Formmasse gelegentlich eine zu große Lösemittelaufnahme besitzt, was zwangsläufig zum Quellen und damit zu Rissen führen kann.

Im Dokument JP-A-57 134 234 werden Harze aus Formaldehyd und Furfurylalkohol mit weiterem Furfurylalkohol umgesetzt und als Bindemittel verwendet. Im Dokument JP-A-62 179 847 werden Ketonharze, die eventuell Trioxan als Comonomer enthalten, auch zur Herstellung von Bindemitteln verwendet.

Der Erfindung liegt deshalb die Aufgabe zugrunde, eine härtbare Formmasse zur Herstellung von korrosionsbeständigen Beschichtungen sowie zum Verlegen und/oder Verfugen von insbekeramischen Platten zu schaffen, die eine bessere Lösemittelbeständigkeit, insbesondere auch gegen Methylenchlorid aufweist, und die zusätzlich eine geringere Lösemittelaufnahme besitzt.

Zur Lösung dieser Aufgabe wird gemäß der Erfindung vorgeschlagen, daß der Formmasse auf 100 Gewichtsteile Furanharz 5 - 40 Gewichtsteile Trioxan zugesetzt werden.

Eine derartige Formmasse ist auch gegen Methylenchlorid beständig und besitzt eine so geringe Lösemittelaufnahme, daß keine Quellungen, insbesondere aber keine dadurch bedingten Risse auftreten. Die Vorteile einer verringerten Geruchsbelästigung und einer erhöhten Druckfestigkeit bleiben erhalten. Die Toxizität einer solchen Formmasse wird weiter reduziert.

Weitere Merkmale einer härtbaren Formmasse gemäß der Erfindung sind in den Ansprüchen 2 - 6 offenbart.

Die Erfindung wird nachfolgend anhand zweier Ausführungsbeispiele näher erläutert.

### Beispiel 1

Aus 100,0 g eines handelsüblichen Furanharzes auf der Basis von Furfurylalkohol (Viskosität bei 25°C ca. 4500 mPas, Dichte 1,2g/cm³, Wassergehalt 1,0%), 23,0 g Furfurylalkohol und 23,0 g Trioxan wird eine niedrigviskose Furanharzlösung hergestellt. Zu dieser Furanharzlösung werden unter Rühren folgende Zusätze gegeben:
100,0 g Furanharzlösung
1,0 g Netzmittel, handelsüblich
30,0 g Amidosulfonsäure
450,0 g Quarzmehl
Die Masse wird zur Aushärtung 28 Tage bei Raumtemperatur gelagert. Danach wird die Druckfestigkeit in Anlehnung an die Dechema-Richtlinie "Bestimmung physikalischer, insbesondere mechanischer Kennwerte von Kitten für den Säureschutzbau" ermittelt. Druckfestigkeit: 81 N/qmm
Zusätzlich werden weitere Prüfkörper 6 Wochen in Methylenchlorid bei 20°C gelagert. Die Gewichtsaufnahme der Prüfkörper nach dieser Einlagerungszeit beträgt 0,8 Gewichtsprozent. Eine merkliche Quellung und Risse sind nicht feststellbar.

### Beispiel 2

Aus 100,0 g des handelsüblichen Furanharzes aus Beispiel 1, 22,0 g Zimtaldehyd und 24,0 g Trioxan wird eine Furanharzlösung hergestellt. Zu 100,0 g der Furanharzlösung werden die gleichen Zusätze wie im Beispiel 1 gegeben und nach der Härtung die Druckfestigkeit ermittelt. Druckfestigkeit: 83 N/qmm
Die Gewichtsaufnahme nach 6 Wochen Lagerung in Methylenchlorid bei 20°C beträgt 1,3 Gewichtsprozent. Eine merkliche Quellung und Risse sind nicht feststellbar.

## Patentansprüche

1. Härtbare Formmasse zur Herstellung von korrosionsbeständigen Beschichtungen sowie zum Verlegen und/oder Verfugen von insbesondere keramischen Platten, bestehend aus 100 Gewichtsteilen Furanharz und 10 - 95 Gewichtsteilen Furfurylalkohol oder 10 - 95 Gewichtsteilen aromatischen Aldehyden, wobei die Aldehydgruppe entweder direkt am Aromatenring sitzt oder über eine Alkylen- oder Alkenylengruppe mit demselben verbunden ist, einem oder mehreren Säurehärtern, Füllstoffen und/oder Fasern und üblichen Hilfsstoffen,
dadurch gekennzeichnet,
daß auf 100 Gewichtsteile Furanharz 5 - 40 Gewichtsteile Trioxan zugesetzt werden.

2. Formmasse nach Anspruch 1,
dadurch gekennzeichnet,
daß dem Furanharz Zimtaldehyd zugesetzt wird.

3. Formmasse nach Anspruch 1,
dadurch gekennzeichnet,
daß dem Furanharz Tolylaldehyd zugesetzt wird.

4. Formmasse nach Anspruch 1,
dadurch gekennzeichnet,
daß dem Furanharz Benzaldehyd zugesetzt wird.

5. Formmasse nach Anspruch 1,
dadurch gekennzeichnet,
daß dem Furanharz Anisaldehyd zugesetzt wird.

6. Formmasse nach Anspruch 1,
dadurch gekennzeichnet,
daß dem Furanharz Salicylaldehyd zugesetzt wird.

## Claims

1. Thermosetting moulding compound for the production of corrosion-resistant coatings and for the laying and/or joining of in particular ceramic tiles, consisting of 100 parts by weight furan resin and 10 - 95 parts by weight furfuryl alcohol or 10 - 95 parts by weight aromatic aldehydes, the aldehyde group either sitting directly on the aromatic ring or being linked thereto via an alkylene or alkenyl group, one or more acid catalysts, fillers, and/or fibres and the usual additives, characterised in that 5 - 40 parts by weight trioxane are added to 100 parts by weight furan resin.

2. Moulding compound according to claim 1, characterised in that cinnamaldehyde is added to the furan resin.

3. Moulding compound according to claim 1, characterised in that tolyl aldehyde is added to the furan resin.

4. Moulding compound according to claim 1, characterised in that benzaldehyde is added to the furan resin.

5. Moulding compound according to claim 1, characterised in that anisaldehyde is added to the furan resin.

6. Moulding compound according to claim 1, characterised in that salicylaldehyde is added to the furan resin.

## Revendications

1. Mélange à mouler durcissable, destiné à préparer des revêtements résistant à la corrosion, ainsi qu'à la pose et/ou au jointoiement de plaques en particulier céramiques, constitué de 100 parties en poids d'une résine furannique et de 10 à 95 parties en poids d'alcool furfurylique ou de 10 à 95 parties en poids d'aldéhydes aromatiques, où le groupe aldéhyde se trouve directement sur le noyau aromatique ou bien est relié à ce dernier par l'intermédiaire d'un groupe alkylène ou alcényle, d'un ou plusieurs agents de durcissement acides, de charges et/ou de fibres et d'adjuvants usuels, caractérisé en ce qu'on ajoute, pour 100 parties en poids de résine furannique, de 5 à 40 parties en poids de trioxanne.

2. Mélange à mouler selon la revendication 1, caractérisé en ce qu'on ajoute du cinnamaldéhyde à la résine furannique.

3. Mélange à mouler selon la revendication 1, caractérisé en ce qu'on ajoute du tolylaldéhyde à la résine furannique.

4. Mélange à mouler selon la revendication 1, caractérisé en ce qu'on ajoute du benzaldéhyde à la résine furannique.

5. Mélange à mouler selon la revendication 1, caractérisé en ce qu'on ajoute de l'anisaldéhyde à la résine furannique.

6. Mélange à mouler selon la revendication 1, caractérisé en ce qu'on ajoute du salicylaldéhyde à la résine furannique.
